# EUROPEAN PATENT APPLICATION

(11) **EP 1 811 731 A1**
(43) Date of publication of application: **25.07.2007**
(21) Application number: 05805370.3
(22) Date of filing: 27.10.2005
(51) Int. Cl.: H04L 12/66, H04L 12/56

(54) **DATA AMOUNT MONITORING CONTROL SYSTEM OF CHANNELS**

(30) Priority: 27.10.2004 JP 2004313128
(71) Applicant: Ionos Co., Ltd., Tokyo 1560051 (JP)
(72) Inventor: OHO, Sonoi, Setagaya-ku, Tokyo 1560051 (JP); HOSHINO, Hirokazu, Setagaya-ku, Tokyo 1560051 (JP)
(74) Representative: Modiano, Micaela Nadia
(86) International application number: PCT/JP2005/019817
(87) International publication number: WO 2006/046659

(57) **Abstract**

It is an object of the invention to provide a data amount monitoring control system for channels, which is effective against an attack on an internal network to which massive amounts of data are sent. Switching between the internal network and an external network is exclusively controlled by using a diagnostic inspection relay for measuring an amount of data to be transferred between the internal network and the external network and outputting an instruction signal of the switching operation to a switch control unit, in response to the instruction signal of the switch control unit.

## Description

### TECHNICAL FIELD

The present invention relates to security in a network, and more particularly, to a security technique effective for abnormal data and a large amount of data sent from an external network to an internal network.

### BACKGROUND ART

As a prior art for protecting an internal system from a virus intruding via a network, JP 10-207839 A (Patent Document 1) is known.
In such a prior art, a file consisting of data obtained via a communication line is stored in a readable and writable memory. When a virus is present in the file stored in this memory or when it is judged that a virus is likely to be present in the file, a power supply for the memory, in which the file is stored, is turned off. In addition, switches are provided on a data input side and a data output side of the memory and prevented from being turned on simultaneously.
Patent Document 1: JP 10-207839 A

### DISCLOSURE OF THE INVENTION

### PROBLEMS TO BE SOLVED BY THE INVENTION

In the prior art, data is captured when an input side switch is on and an output side switch is off. After turning off the input side switch and performing a virus check, the output side switch is turned on to perform data transfer.

Since switch operation is complicated as described above, when an abnormal action occurs in each of on and off states, measures have to be taken against the abnormal action. Therefore, security is deteriorated. Specifically, for example, if an operation stops when both the switches come into the off state, in view of the fact that such a security device is interposed between an external network and an internal network, it is likely that means for dissolving a state in which there is no response from an access destination and the networks themselves are paralyzed is lost.

Moreover, since the prior art focuses only on security against a virus, the prior art does not assume a case such as a DoS attack in which a large amount of data is sent to the internal network. Therefore, it is likely that the data passes through the security device unless the data itself is abnormal.

More specifically, if the internal network comes under the DoS attack and a host terminal of the internal network is down, it is possible to continuously operate a service simply by promptly restarting the host terminal. If a traffic is paralyzed, it is possible to provide a smooth service by switching a line to another line.

However, a possibility that the restart due to this system down of the host terminal increases criticality is innegligible.
For example, it cannot be denied that this system down of the host terminal is a system down attack engineered to allow a hacker to intrude into a target host.

The hacker makes a DoS attack against the internal network using a large number of steppingstones (through terminals of third parties) and creates an account (installs a backdoor), with which the hacker can intrude into the host terminal using a root authority when the host terminal is restarted, according to buffer overrun making bad use of a security hole. Thereafter, when system down occurs because of the buffer overflow, there is no means of restoration other than restart. A normal system administrator restarts the host terminal being kept connected to the network. In that case, as described above, since the account, with which the hacker can intrude into the host terminal using the root authority, is created, it is possible to intrude into the host terminal from the outside using this account.

Therefore, when the host terminal is a file server that stores important data, information leakage should be predicted.
Taking the above into account, it is possible to easily understand how dangerous the system down is.

The present invention has been made in view of such a point and it is a technical object of the invention to provide a data amount monitoring control system for channels that is extremely effective against an attack of sending a large amount of data to an internal network.

### MEANS FOR SOLVING THE PROBLEMS

In order to achieve the object, the present invention adopts the following means.
That is, the invention relates to a data amount monitoring control apparatus for channels, which is interposed between an external network and an internal network, including: an external relay that is connected to the external network and has a buffer for temporarily storing packet data; an internal relay that is connected to the internal network and has a buffer for temporarily storing packet data; a diagnostic inspection relay for measuring an amount of data transferred and outputting an instruction signal for a switch operation to a switch control unit; a first switch for exclusively performing connecting/opening of the internal relay and the diagnostic inspection relay and opening/connecting of the diagnostic inspection relay and the external relay according to an instruction signal of the switch control unit; and a second switch for exclusively performing opening/connecting of the diagnostic inspection relay and the internal relay and connecting/opening of the external relay and the diagnostic inspection relay according to an instruction signal of the switch control unit.

### EFFECT OF THE INVENTION

According to the invention, it is possible to establish a security system that is extremely effective against an attack of sending a large amount of data to an internal network.

### BRIEF DESCRIPTION OF THE DRAWINGS

Fig. 1 is a schematic diagram of a data amount monitoring control system of the invention.
Fig. 2 is an explanatory diagram showing an operation concept of the data amount monitoring control system of the invention.
Fig. 3 is a system diagram of a data monitoring control system of an embodiment.
Fig. 4 is a detailed hardware diagram of the data monitoring control system of the embodiment.
Fig. 5 is an explanatory diagram showing an operation concept of switches of the embodiment.
Fig. 6 is a diagram (1) showing an operation procedure of the switches and packet data of the invention step by step.
Fig. 7 is a diagram (2) showing the operation procedure of the switches and packet data of the invention step by step.
Fig. 8 is a diagram (3) showing the operation procedure of the switches and packet data of the invention step by step.
Fig. 9 is a diagram (4) showing the operation procedure of the switches and packet data of the invention step by step.
Fig. 10 is a diagram (5) showing the operation procedure of the switches and packet data of the invention step by step.
Fig. 11 is a diagram (6) showing the operation procedure of the switches and packet data of the invention step by step.
Fig. 12 is a diagram (7) showing the operation procedure of the switches and packet data of the invention step by step.
Fig. 13 is a diagram (8) showing the operation procedure of the switches and packet data of the invention step by step.
Fig. 14 is a diagram (9) showing the operation procedure of the switches and packet data of the invention step by step.
Fig. 15 is a diagram (10) showing the operation procedure of the switches and packet data of the invention step by step.
Fig. 16 is a diagram (11) showing the operation procedure of the switches and packet data of the invention step by step.
Fig. 17 is a diagram (12) showing the operation procedure of the switches and packet data of the invention step by step.
Fig. 18 is a diagram (13) showing the operation procedure of the switches and packet data of the invention step by step.
Fig. 19 is a diagram (14) showing the operation procedure of the switches and packet data of the invention step by step.
Fig. 20 is a diagram (15) showing the operation procedure of the switches and packet data of the invention step by step.
Fig. 21 is a diagram (16) showing the operation procedure of the switches and packet data of the invention step by step.
Fig. 22 is a diagram (17) showing the operation procedure of the switches and packet data of the invention step by step.

### BEST MODE FOR CARRYING OUT THE INVENTION

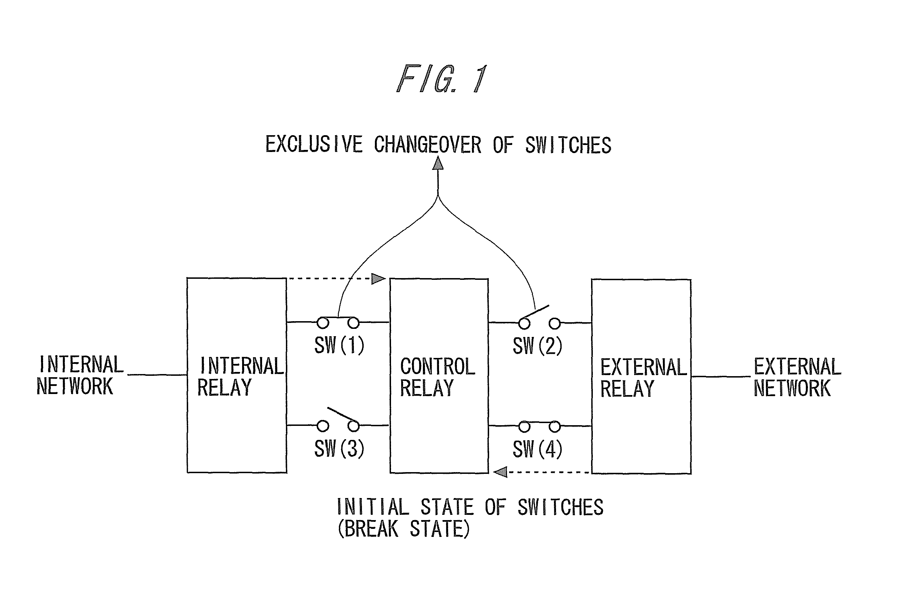

This system will be explained with the drawings.
As shown in a conceptual diagram in Fig. 1, this switch system has an internal relay, a control relay, and an external relay.

A switch (1) is provided on a channel in an inner to outer direction between the internal relay and the control relay andaswitch (2) is provided between the control relay and the external relay.
A switch (3) is provided on a channel in an outer to inner direction between the control relay and the internal relay and a switch (4) is provided between the external relay and the control relay.

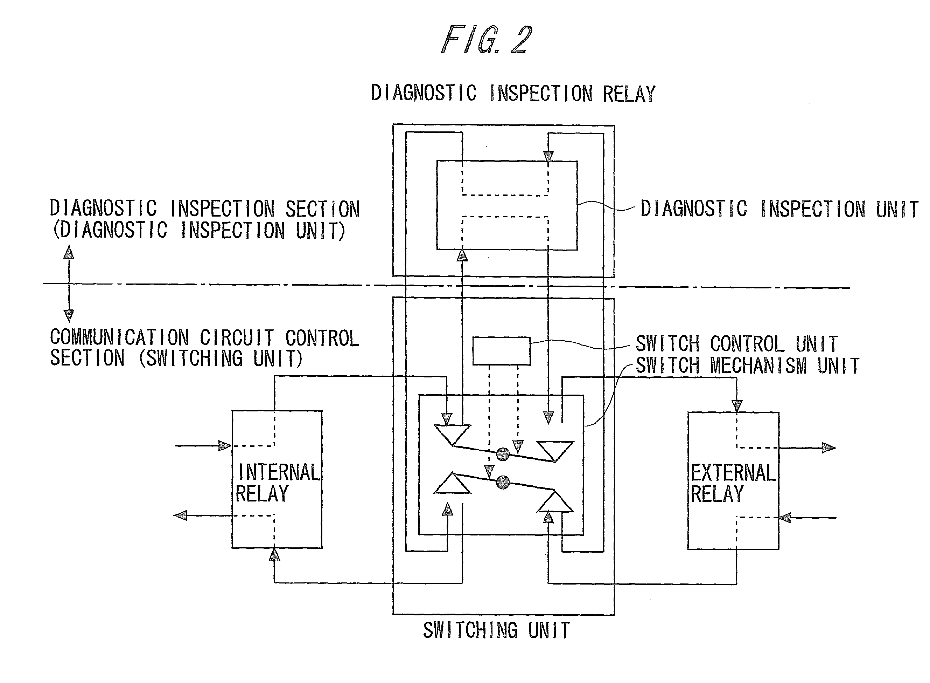

Fig. 2 is a diagram schematically showing an internal structure of the control relay.
As shown in the figure, the control relay is constituted by a diagnostic inspection relay including a diagnostic inspection unit and a switching unit including a switch control unit and a switch mechanism unit.

In this embodiment, as a 3-relay exclusive connection system, a mechanism is adopted in which a switch mechanism in the switching unit is controlled mainly by the diagnostic inspection relay, channels of an external network and an internal network are exclusively connected, and a state in which one of the networks is connected and the other is not connected is always kept to disallow intrusion into the inside or prevent information from leaking to the outside.

The diagnostic inspection unit sets a packet amount as a reference object of a diagnostic inspection in a breaker system.
For example, when a large quantity of packets enough to eat up resources of a host terminal connected to the internal network intrude into the system, a packet quantity per unit of second recognized to be likely to eat up the resources of the host terminal (referred to as break point) is set as a judgment reference value as appropriate. Whenpackets exceeding the break point are continued in a fixed time, the diagnostic inspection unit outputs a signal for stopping switch changeover to the switch mechanism unit via the switch control unit and disconnects communication between the internal network and the external network.

When an excessive amount of communication is generated to a specific logical channel seizing upon a security hole, a normal average communication amount of the specific logical channel is set as a judgment reference. The diagnostic inspection unit observes a difference between an amount of communication and the normal average communication amount and, when the amount of communication exceeds an allowable amount, outputs a signal for stopping switch changeover to the switch mechanism unit via the switch control unit and disconnects communication between the internal network and the external network.

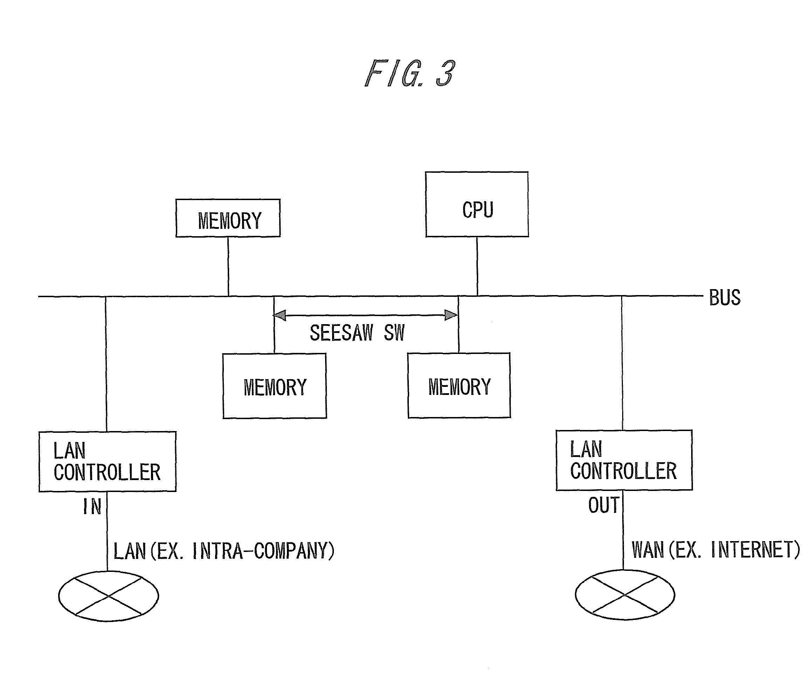

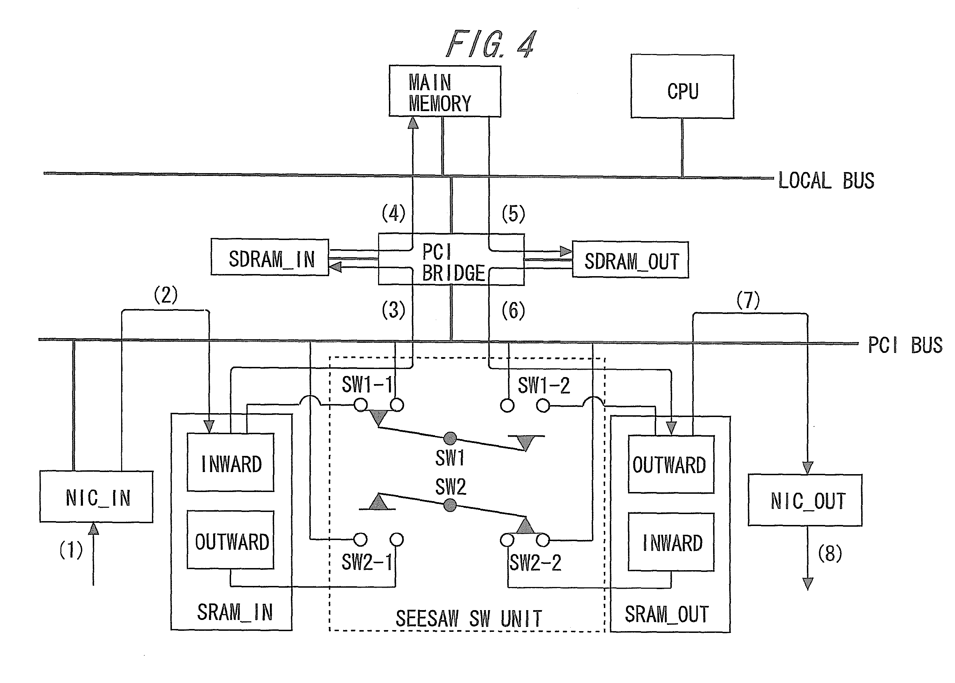

Fig. 3 is a diagram schematically showing a hardware configuration of this system. Fig. 4 is a more detailed explanatory diagram.
In Fig. 4, SRAMs are provided in the internal relay and the external relay. An inward area and an outward area are provided in the SRAM_IN in the internal relay and the SRAM_OUT in the external relay, respectively. The inward area is a storage area for receiving data from a NIC and the outward area functions as an area for storing data transmitted to the NIC.

Conceptually, it only has to be considered that these storage areas and the NIC are connected by one-way paths, respectively.
A seesaw SW unit is constituted by SW1 and SW2 that operate as seesaws, respectively. Here, the seesaw is an expression for making it easy to understand operations and accurately means exclusive control. The exclusive control means control in a relation in which, when one is on, the other is always off.

As shown in Fig. 4, SW1-1 and SW1-2 are provided at both ends of the SW1 and SW2-1 and SW2-2 are provided at both ends of the SW2. The SW1-1 and the SW1-2 connect/open or open/connect a channel from a NIC_IN of the internal network to an SDRAM_IN of a PCI bridge and a channel from an SDRAM_OUT of the PCI bridge to a NIC_OUT, respectively. The SW1-1 and the SW1-2 are in a relation of the exclusive control. When the SW1-1 connects the channel, the SW1-2 is in an open state. When the SW1-1 opens the channel, the SW1-2 is in a connected state.

On the other hand, SW2-1 and the SW2-2 connect/open or open/connect the channel from the NIC_IN to the SDRAM_IN of the PCI bridge and the channel from the SDRAM_OUT of the PCI bridge to the NIC_OUT. The SW2-1 and the SW2-2 are also in the relation of the exclusive control. When the SW2-1 connects the channel, the SW2-2 is in an open state. When the SW2-1 opens the channel, the SW2-2 is in a connected state.

The SW1 and the SW2 have, as default states, states shown in Fig. 4, i.e., states in which the SW1-1 is ON in the SW1 and the SW2-2 is ON in the SW2, respectively. However, the SW1 and the SW2 perform a seesaw operation at certain timing (timing will be explained later). For example, the SW1 is changed over to an opposite state (a state in which the SW1-1 is OFF and the SW1-2 is ON) at this operation timing and returns to the default state. Similarly, the SW2 performs the seesaw operation at certain operation timing. Naturally, the SW1 and the SW2 operate independently of each other.

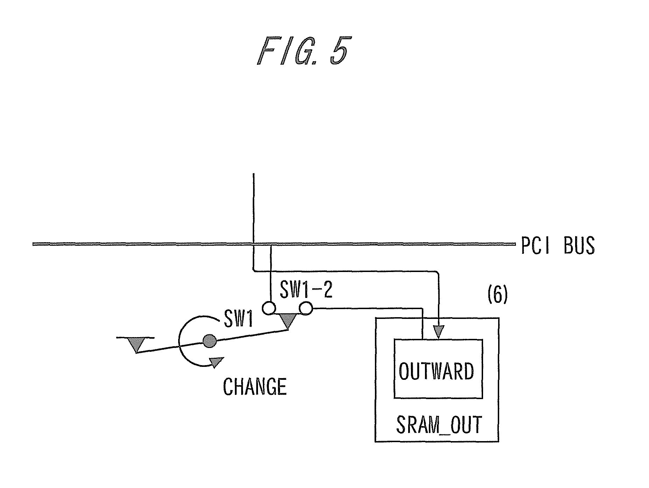

Aflowof data will be explained. Numbers in parentheses (1) to (9) in the figure indicate, step by step, a transmission process until data (frame data) inputted to the NIC_IN is outputted to the NIC_OUT. The flow will be explained according to the numbers.
(1) Data is inputted from a network (e.g., a LAN) connected to the NIC_IN. The input data is temporarily stored in a buffer (not shown) of the NIC_IN.
(2) The data is stored in the inward area of the SRAM_IN through the PCI bus.
(3) The data is sent from the SW1-1 through the PCI bus and temporarily stored in a work memory (SDRAM_IN) for a PCI bus bridge. Since the SW1 is in the default state, the data transmitted from the SRAM_IN directly reaches the SDRAM_IN.
(4) The data outputted from the SDRAM_IN is stored in a main memory through a local bus. A CPU monitors the data stored in the main memory and detects a packet flow rate and the like.
(5) The data transmitted from the main memory is stored in the SDRAM_OUT through the local bus.
(6) The data transmitted from the SDRAM_OUT is sent through the PCI bus and stored in the outward area of the SRAM_OUT through the SW1-2. Fig. 5 is an explanatory diagram showing a flow of the data in (6) above . As shown in the figure, the SW1 in the default state is changed over to the opposite state at timing when the data is outputted from the SDRAM_OUT and the SW1-2 comes into the ON state. This allows the data to directly reach the SRAM_OUT. Thereafter, when the data reaches the SRAM_OUT, the SW1 changed over above returns to the default and the SW1-2 is turned off.
(7) The data reaches the NIC_OUT through the PCI bus and, as in (1), temporarily stored in the buffer of the NIC_OUT. However, the data is not fully buffered on the transmission side. A buffer prepared here is constituted by, for example, a 128-byte FIFO (First In First Out) memory.
(8) Subsequently, the data is outputted to a network (e.g., a WAN) connected to the NIC_OUT. In the way described above, the data inputted to the NIC_IN is outputted to the NIC_OUT according to the exclusive operation of the SW1. When a flow of data is opposite to the flow described above, the SW2 performs the exclusive operation.

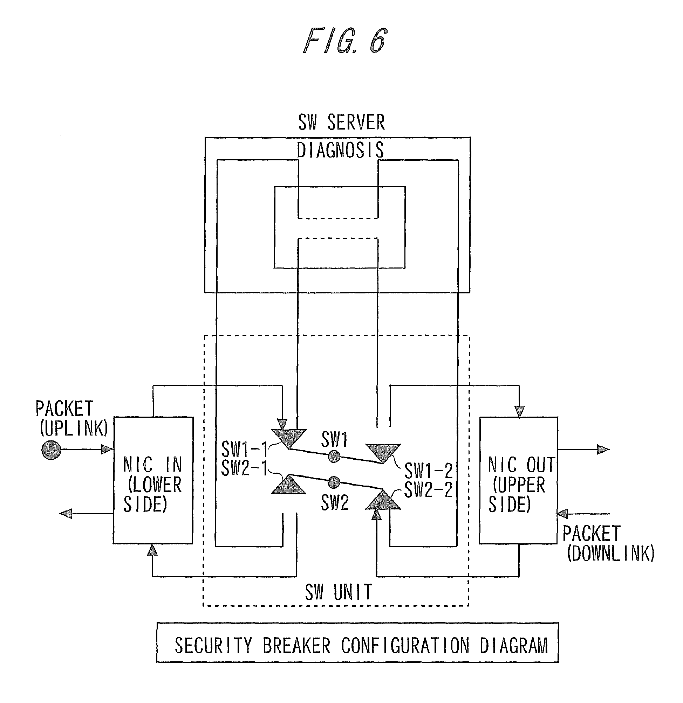

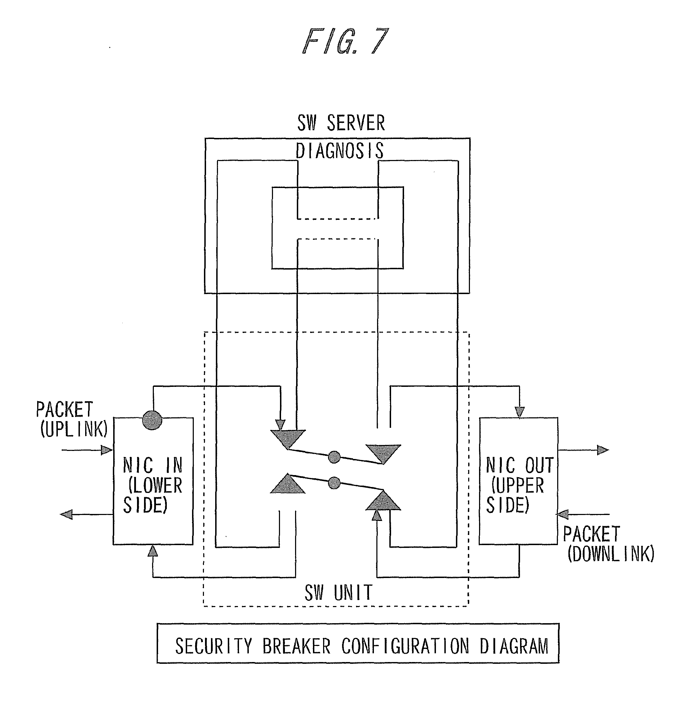

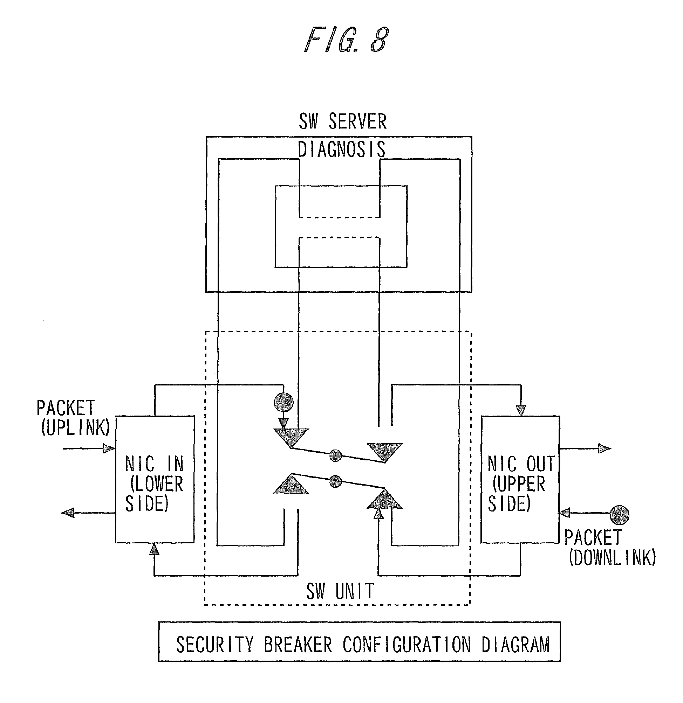

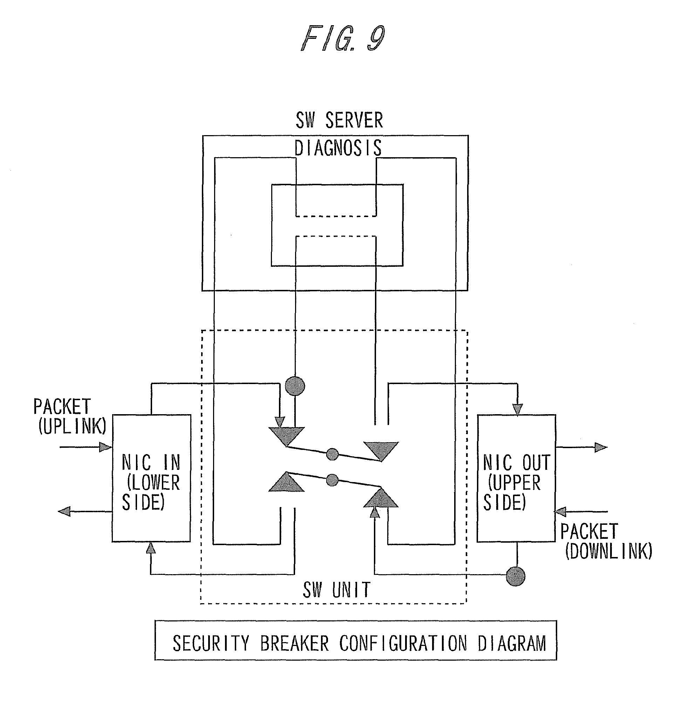

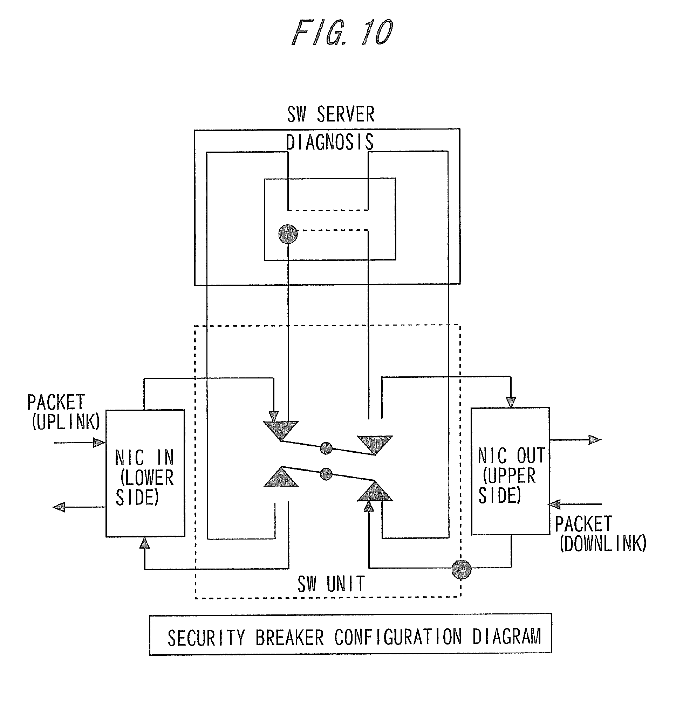

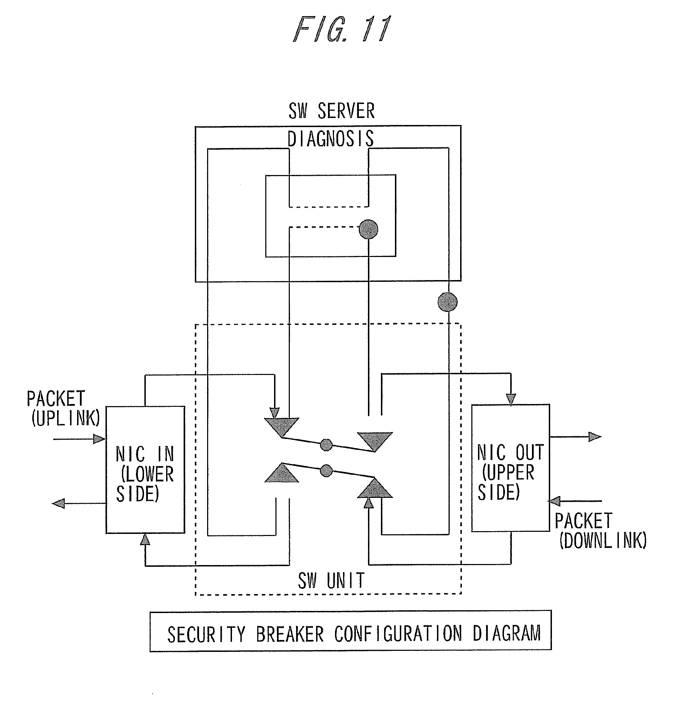

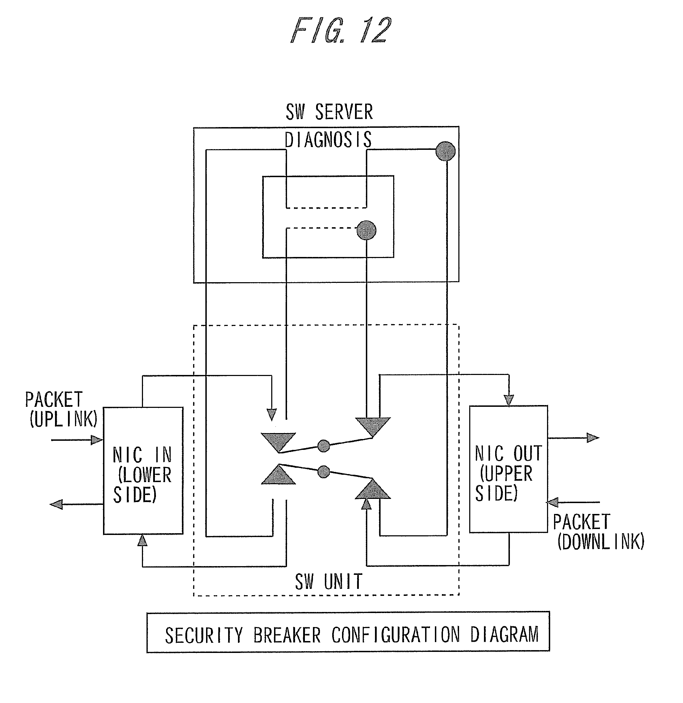

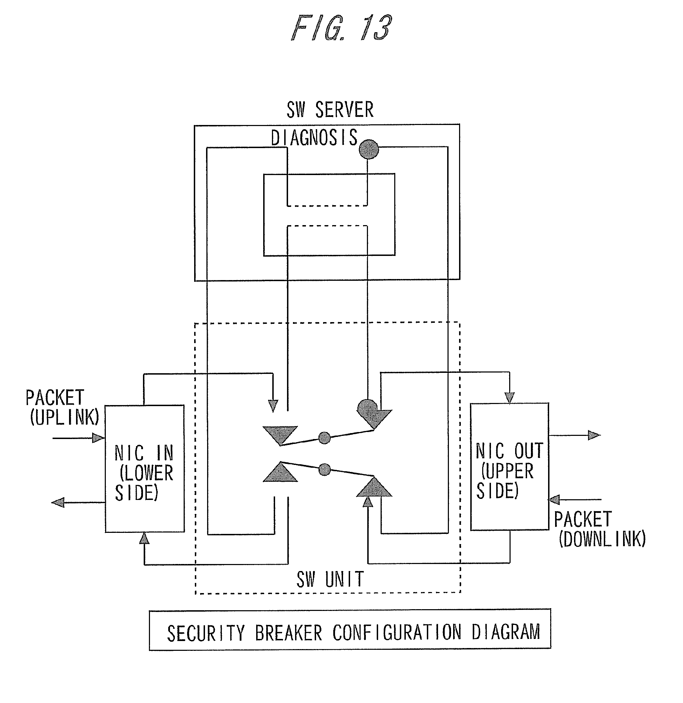

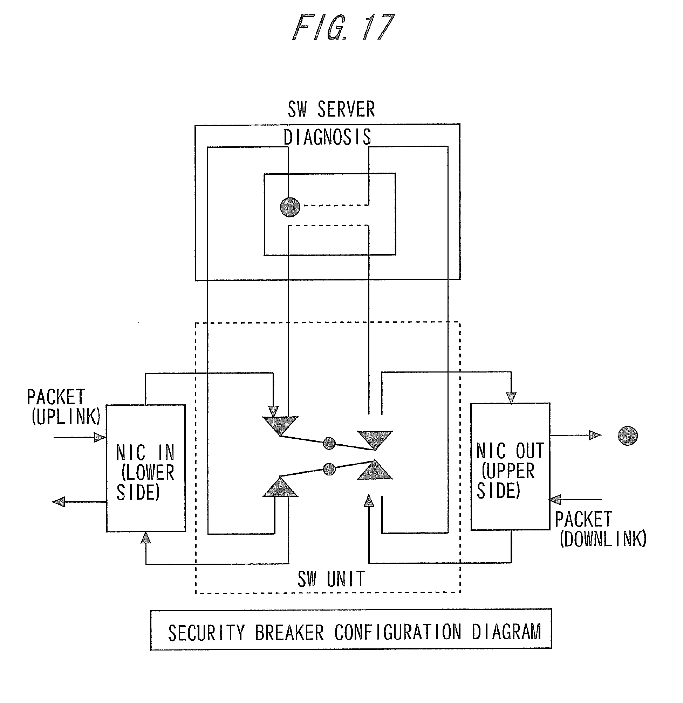

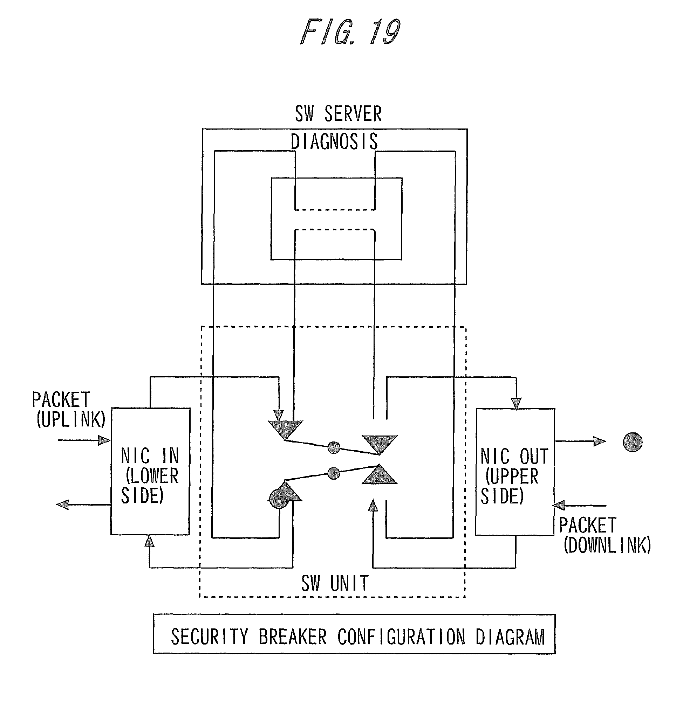

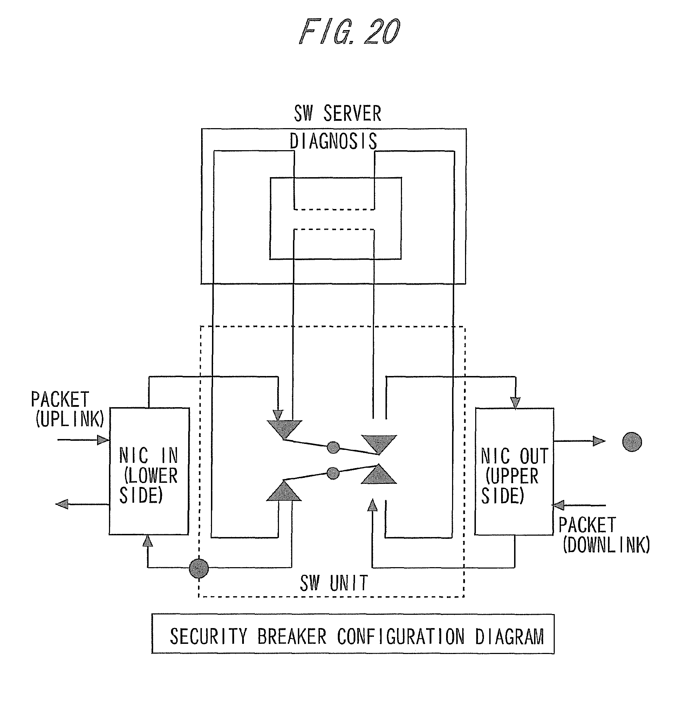

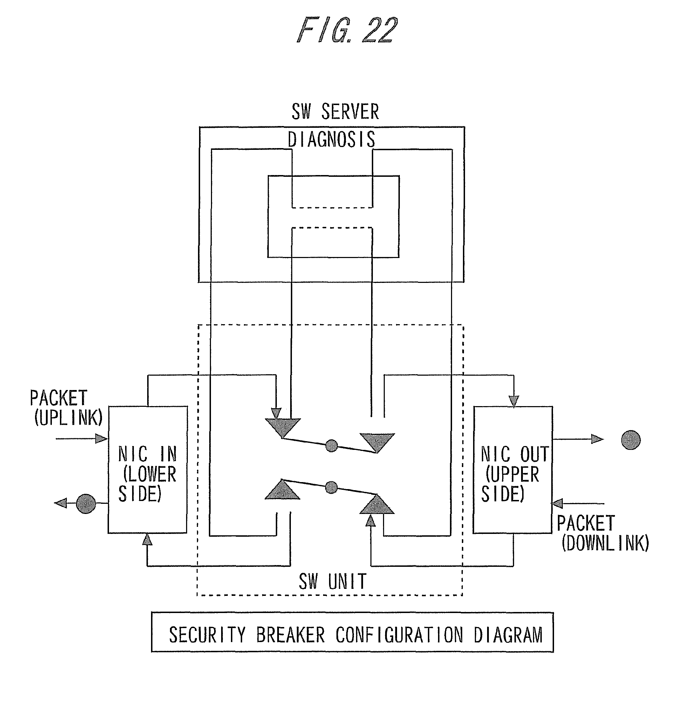

Figs. 6 to 22 are diagrams showing movement of packet data and operations of the switches SW1 and SW2 according to this embodiment step by step.
First, uplink packet data reaches the NIC_IN from the internal network, passes the SW1-1 of the SW1, which is in the connected state, from the NIC_IN, and reaches an SW server (a diagnostic inspection relay) (Figs. 6 to 10). In this case, the SW server verifies the uplink packet data. When a verification result is OK, the SW server outputs a changeover signal for opening the SW1-1 of the SW1 to the switch mechanism unit and bringing the SW1-2 into the connected state to the switch control unit (Fig. 12). The uplink packet data is sent through the SW1-2 of the SW1, which is changed over and brought into the connected state, and transmitted to the external network through the NIC_OUT (Figs. 13 to 17).
In parallel to the above, downlink packet data reaches the SW server (the diagnostic inspection relay) through the NIC_OUT from the external network and through the SW2-2, which is in the connected state (Figs. 8 to 11).

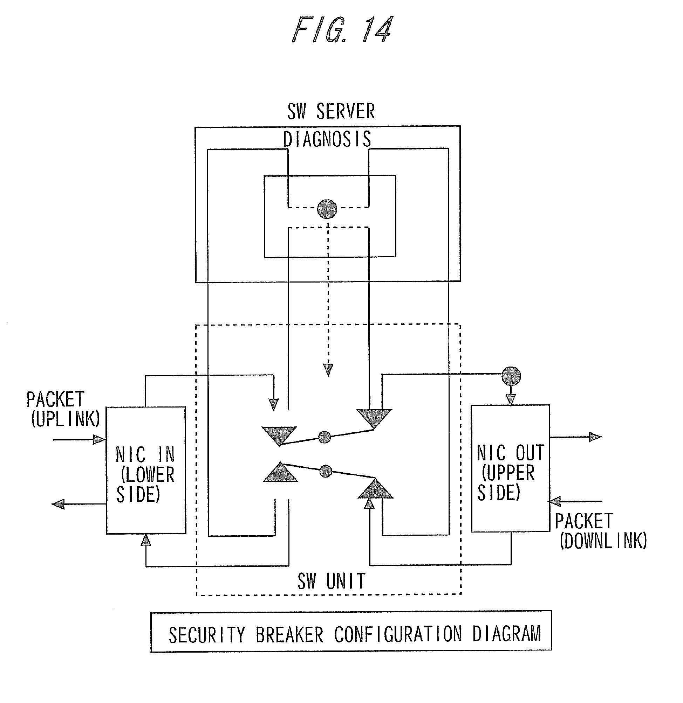

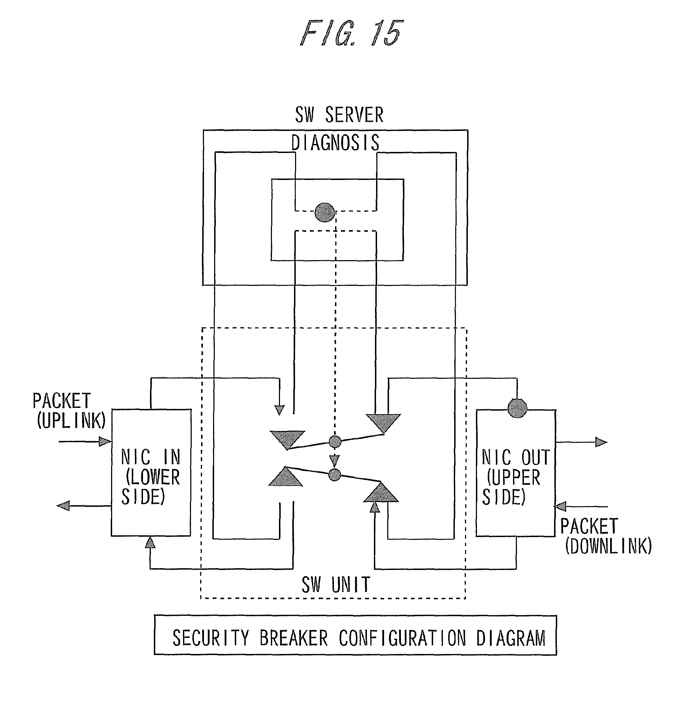

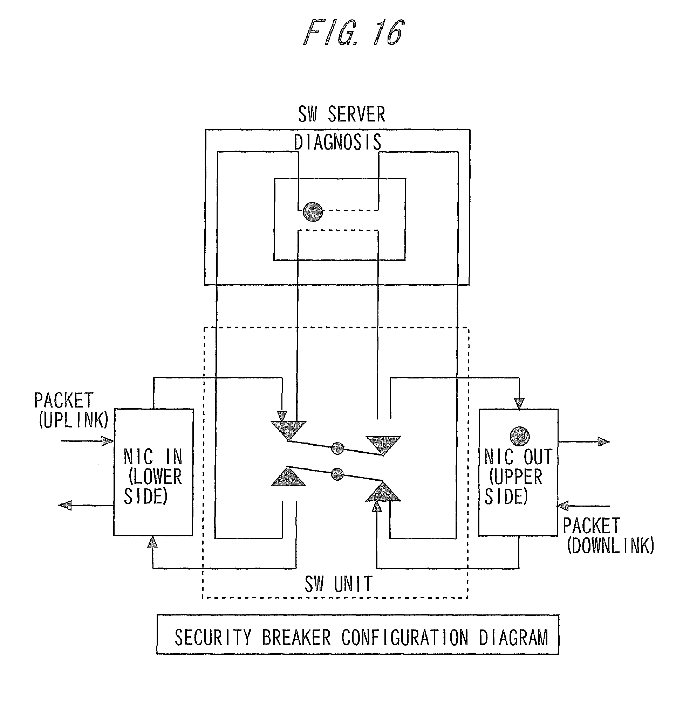

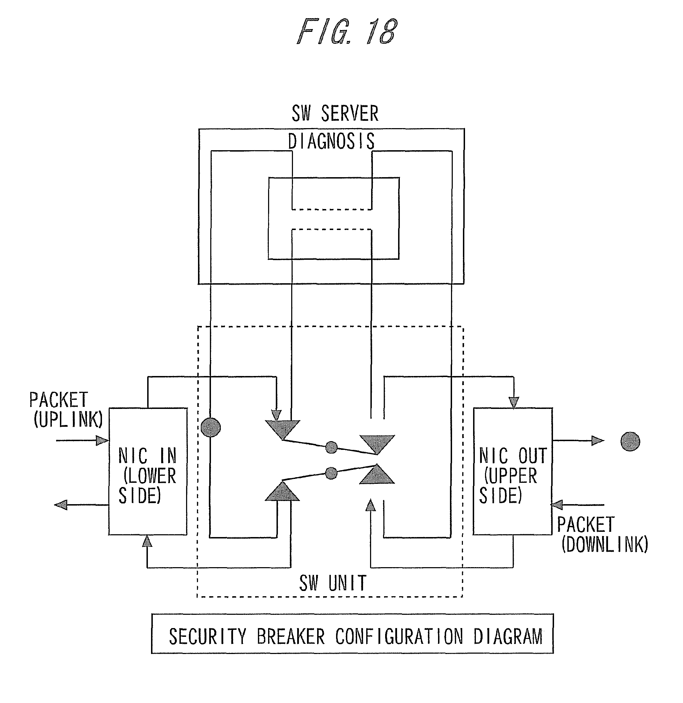

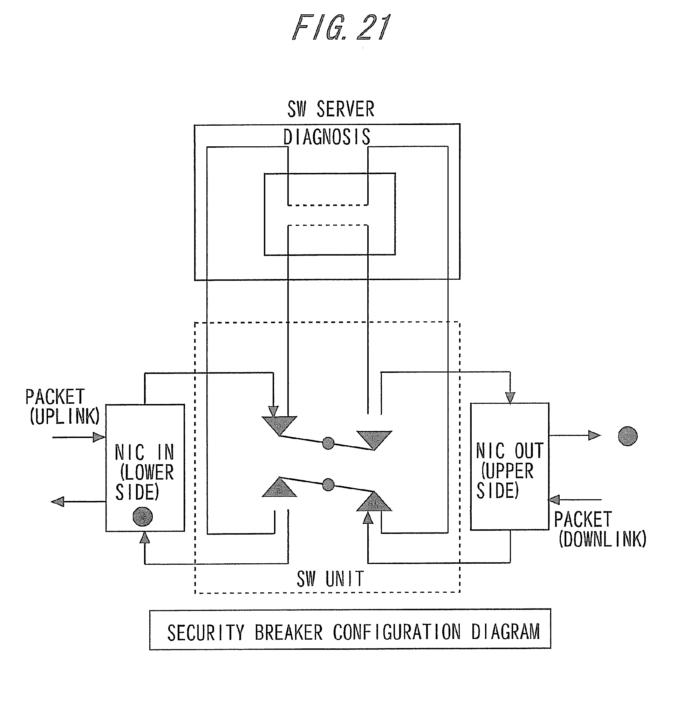

The SW server verifies the downlink packet data. When a verification result is OK, the SW server outputs a changeover signal for opening the SW2-2 of the SW2 to the switch mechanism unit and bringing the SW2-1 into the connected state to the switch control unit (Figs. 14 to 17). The downlink packet data is sent through the SW2-1, which is changed over and brought into the connected state, and transmitted to the internal network through the NIC_IN (Figs. 18 to 22). The SW1 and the SW2 are changed over to the original states at timing shown in Fig. 16 and timing shown in Fig. 21, respectively.

As described above, in this embodiment, a switch connection control apparatus for channels is interposed in channels and exclusively selects connection to the channel on one side and connectiontotheotherchannel. Therefore, itispossibletorealize a security system that prevents communication of abnormal data and a large amount of data using the switching technique of the 3-realy exclusive connection system in terminals and systems distributed for respective purposes. The external network and the internal network are physically separated by a control signal for access request corresponding to a purpose according to the switching technique of the 3-realy exclusive connection system in this way. This makes it possible to surely protect data and terminals from illegal acts.

### INDUSTRIAL APPLICABILITY

It is possible to use the invention for a security technique against a network attack in which a large amount of data is sent via a channel.

## Claims

1. A data amount monitoring control apparatus for channels, which is interposed between an external network and an internal network, comprising:
an external relay that is connected to the external network and has a buffer for temporarily storing packet data;
an internal relay that is connected to the internal network and has a buffer for temporarily storing packet data;
a diagnostic inspection relay for measuring an amount of data transferred and outputting an instruction signal for a switch operation to a switch control unit;
a first switch for exclusively performing connecting/opening of the internal relay and the diagnostic inspection relay and opening/connecting of the diagnostic inspection relay and the external relay according to an instruction signal of the switch control unit; and
a second switch for exclusively performing opening/connecting of the diagnostic inspection relay and the internal relay and connecting/opening of the external relay and the diagnostic inspection relay according to an instruction signal of the switch control unit.
